# EUROPÄISCHE PATENTSCHRIFT

(11) **EP 1 552 974 B1**
(45) Veröffentlichungstag und Bekanntmachung des Hinweises auf die Patenterteilung: **18.07.2012**
(21) Anmeldenummer: 04030503.9
(22) Anmeldetag: 22.12.2004
(51) Int. Cl.: B60J 7/00

(54) **Vorrichtung zur Übertragung einer rotarischen Antriebskraft auf ein im wesentlichen geradlinig bewegtes Bauteil**
Device for transmitting a rotary drive force to a straight moving component
Dispositif pour transmettre une force de commande rotationelle à un élément à déplacement linéair.

(30) Priorität: 12.01.2004 DE 202004000336 U
(43) Veröffentlichungstag der Anmeldung: 13.07.2005
(73) Patentinhaber: HS Products Engineering GmbH, 82239 Alling (DE)
(72) Erfinder: Ziegenbein, Werner, 81929 München (DE)
(74) Vertreter: Patentanwälte Bals & Vogel

(56) Entgegenhaltungen:
- EP-A2- 1 123 824
- DE-A1- 3 047 800
- DE-A1- 3 124 444
- DE-U1- 29 921 859
- DE-U1- 29 921 860

## Beschreibung

Die Erfindung betrifft eine Vorrichtung zur Übertragung einer rotatorischen Antriebskraft auf ein im wesentlichen geradlinig bewegtes Bauteil mit einem die Antriebskraft übertragenden biegbaren Antriebskabel, welches in seiner Längsausdehnung um wenigstens eine Umlenkstelle umgelenkt ist und ein innenliegendes Drahtseil aufweist, um welches ein Draht schraubenförmig gewickelt ist.

An dem schraubenförmig gewickelten Draht greift ein Getriebeteil, beispielsweise von einem Elektromotor angetriebenes Zahnrad, Ritzel oder dergleichen an, um ein Drehmoment auf das in seiner Längsrichtung bewegte, biegbare Antriebkabel zu übertragen. Mit dem Antriebskabel ist ein bewegliches Bauteil, beispielsweise ein Schlitten fest verbunden, welcher in einer Führung hin und her geradlinig bewegt wird. Das biegbare Antriebskabel ist um eine oder mehrere Umlenkstellen geführt, um die Antriebsbewegung auf das zu bewegende Bauteil zu übertragen. Derartige Antriebskabel kommen beispielsweise beim Bewegen eines Schiebedachdeckels eines Kraftfahrzeugs oder beim Bewegen von Fensterrollos (DE 299 21 859 U) zum Einsatz.

DE 3 047 800 zeigt einen Antriebsmechanismus mit einer Schicht aus Kunstharz zur Geraüsschreduzierung.

Aufgabe der Erfindung ist es, die Führung des Antriebskabels zu verbessern.

Diese Aufgabe wird dadurch gelöst, dass das Antriebskabel in dem Kabelbereich, welcher um die wenigstens eine Umlenkstelle bewegt wird, eine geräuschmindernde Hülle aufweist.

Hierdurch werden störende Geräusche, welche bei der Bewegung des Antriebskabels in seiner Längsrichtung, insbesondere im Bereich der einen oder mehreren Umlenkstellen sich ergeben, im wesentlichen beseitigt. Man erreicht eine geräuschfreie oder zumindest geräuscharme Stellbewegung auf das mit dem Antriebskabel bewegte Bauteil. Das Antriebskabel kann somit um Kanten, Übergänge und um kleine Radien im Fahrzeug geführt werden.

Die Hülle kann dabei auf dem innenliegenden Drahtteil in dem Kabelbereich, welcher um die Umlenkstelle bewegt wird, direkt aufliegen. Bei einer weiteren Ausführungsform liegt die Hülle auf dem schraubenförmigen Draht, welcher um den innenliegenden Drahtteil gewickelt wird, auf.

Die Hülle ist vorzugsweise derart, dass sie den Drahtbereich, welcher um die jeweilige Umlenkstelle bewegt wird, vollständig umhüllt.

Der Bewegungsbereich des Antriebskabels, welcher außerhalb der jeweiligen Umlenkstelle liegt, und welcher insbesondere mit dem vom Motor angetriebenen Getriebe in Eingriff kommt, besitzt keine Hülle. Bevorzugt kommt die Vorrichtung zur Übertragung einer Antriebskraft mit Hilfe des Antriebskabels auf ein Rollo zum Einsatz, welches zum Abdecken von Bauteilen in einem Kraftfahrzeug, insbesondere zum Abdecken von Fenstern in einem Kraftfahrzeug zum Einsatz kommt.

Anhand der Figuren wird an Ausführungsbeispielen die Erfindung noch näher erläutert.

Es zeigt
- Fig. 1: eine Vorrichtung zur Übertragung einer Antriebskraft auf ein im wesentlichen geradlinig bewegtes Bauteil in schematischer Darstellung, bei welchem die Erfindung zur Anwendung kommt;
- Fig. 2: ein erstes Ausführungsbeispiel für ein Antriebskabel, welches im Bereich einer Umlenkstelle der in Fig. 1 dargestellten Vorrichtung zum Einsatz kommt; und
- Fig. 3: eine weitere Ausführungsform für ein Antriebskabel im Bereich einer Umlenkstelle der in Fig. 1 dargestellten Vorrichtung.

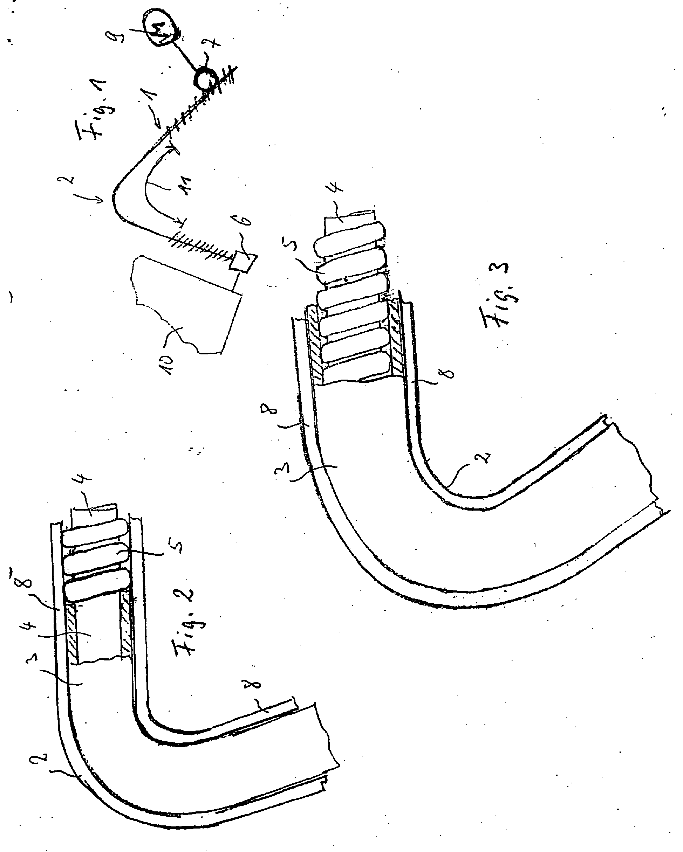

Die in Fig. 1 dargestellte Vorrichtung dient zur Übertragung einer von einem Antriebsmotor, insbesondere Elektromotor 9 erzeugten Antriebskraft auf ein im wesentlichen geradlinig bewegtes Bauteil 6. Zur Übertragung der Antriebskraft dient ein biegbares Antriebskabel 1, welches in seiner Längsrichtung beweglich in einer Kabelführung 8 (Fig. 2 und 3) geführt ist. Die Kabelführung 8 besitzt eine Umlenkstelle 2.

Das biegbare Antriebskabel 1 weist ein innenliegendes Drahtseil 4 auf. Um dieses ist ein Draht 5 schraubenförmig gewickelt.

In die Gewindegänge des schraubenförmigen Drahtes 5 greift ein vom Antriebsmotor 9 angetriebenes Ritzel 7 ein und bewegt das Antriebskabel 1 in der Kabelführung in Längsrichtung des Antriebskabels.

In einem Kabelbereich 11, welcher bei der Hin- und Herbewegung des Bauteils 6 um die Umlenkstelle 2 bzw. durch die Umlenkstelle 2 der Kabelführung 8 bewegt wird, besitzt das Antriebskabel 1 eine Hülle 3.

Die Hülle 3 liegt bei dem in Fig. 2 dargestellten Ausführungsbeispiel des Antriebskabels 1 unmittelbar auf dem innenliegenden Drahtseil 4 auf.

Bei dem in der Fig. 3 dargestellten Ausführungsbeispiel liegt die Hülle 3 auf dem schaubenförmigen Draht 5 auf.

Vorzugsweise besteht die Hülle 3 aus einem abriebsfesten Kunststoff, beispielsweise Silikonkautschuk, Polytetrafluorethylen u.a. Durch die Hülle 3 wird eine geräuschfreie oder geräuscharme Bewegung des Antriebskabels im Bereich der Umlenkstelle 2 erreicht. Auf diese Weise wird eine Verbesserung der Bewegung des Antriebskabels 1 in der Kabelführung 8 beim Hin- und Herbewegen des Bauteiles 6 erreicht.

Durch die geräuscharme oder praktisch geräuschfreie Führung des Antriebskabels 1 im Bereich der Umlenkstelle 2 ist es möglich, den Antriebsmotor und das Getriebe, mit welchem die Antriebskraft übertragen wird, an einer geeigneten Stelle im Fahrzeug anzuordnen. Zwischen der Kraftübertragung auf das Antriebskabel 1 und dem zu bewegenden Bauteil 6 können eine oder mehrere Umlenkstellen vorgesehen sein, ohne dass dies bei der Bewegung des Bauteiles 6 zu störenden Geräuschen führt.

Vorzugsweise wird das mit der wenigstens einen Hülle ausgestattete Antriebskabel zum Aus- und Einziehen einer Rollobahn eines Fensterrollos 10 für ein Kraftfahrzeugfenster verwendet, wie es aus der deutschen Gebrauchsmuster 299 21 860 oder der deutschen Gebrauchsmusterschrift 299 21 859 bekannt ist.

### [Bezugszeichenliste]

- 1: Antriebskabel
- 2: Umlenkstelle
- 3: Hülle
- 4: Drahtseil
- 5: schraubenförmiger Draht
- 6: geradlinig bewegtes Bauteil
- 7: Ritzel
- 8: Kabelführung
- 9: Antriebsmotor
- 10: Fensterrollo
- 11: Kabelbereich

## Patentansprüche

1. Vorrichtung zur Übertragung einer rotatorischen Antriebskraft auf ein im wesentlichen geradlinig bewegtes Bauteil mit einem die Antriebskraft übertragenden, biegbaren Antriebskabel, welches in seiner Längsausdehnung um wenigstens eine Umlenkstelle umgelenkt ist und ein innenliegendes Drahtseil aufweist, um welches ein Draht schraubenförmig gewickelt ist,
**dadurch gekennzeichnet, dass** das Antriebskabel (1) in einem Kabelbereich (10), welcher um die wenigstens eine Umlenkstelle (2) bewegt ist, eine geräuschmindernde Hülle (3) aufweist, und
der übrige Kabelbereich,
der außerhalb der Umlenkstelle (2) bewegt wird, keine Hülle aufweist.

2. Vorrichtung nach Anspruch 1,
**dadurch gekennzeichnet, dass** die Hülle (3) auf dem innenliegenden Drahtseil (4) aufliegt.

3. Vorrichtung nach Anspruch 1,
**dadurch gekennzeichnet, dass** die Hülle (3) auf dem schraubenförmigen Draht (5) aufliegt. 3

4. Vorrichtung nach einem der Ansprüche 1 bis 3,
**dadurch gekennzeichnet, dass** das Antriebskabel (1) durch die Antriebskraft in seiner Längsrichtung bewegt ist. 4

5. Vorrichtung nach einem der Ansprüche 1 bis 4,
**dadurch gekennzeichnet, dass** das geradlinig bewegte Bauteil (6) mit einem Fensterrollo (10) verbunden ist, welches zum Abdecken eines Kraftfahrzeugfensters dient.

## Claims

1. Apparatus for transmitting a rotational drive force to a substantially linear moved component with a driving force submitting, flexible drive cable which is deflected in its longitudinal extension around at least one deflection point and comprises an inner wire cable, around which a wire is wound helically, **characterized in that** the drive cable (1) comprises a noise-reducing sleeve (3) in a cable area (10) which is moved around the at least one deflection point (2), and the rest of the cable area, which is moved outside of the deflection point (2), does not comprise a sleeve.

2. Apparatus according to claim 1, **characterized in that** the sleeve (3) rests on the inner wire cable (4).

3. Apparatus according to claim 1, **characterized in that** the sleeve (3) rests on the helical wire (5).

4. Apparatus according to any one of claims 1 to 3, **characterized in that** the drive cable (1) is moved by the drive force in its longitudinal direction.

5. Apparatus according to any one of claims 1 to 4, **characterized in that** linearly moved component (6) is connected to a window blind (10) which serves for covering a motor vehicle window.

## Revendications

1. Dispositif pour transmettre une force d'entraînement rotationnelle à un élément déplacé de manière essentiellement rectiligne, avec un câble d'entraînement flexible transmettant la force d'entraînement, câble qui est dévié autour d'au moins un point de déviation dans son étendue longitudinale et qui présente un câble métallique intérieur autour duquel un fil métallique est enroulé en hélice, **caractérisé en ce que** le câble d'entraînement (1) présente, dans une région (10) du câble qui est déplacée autour du point de déviation (2) au moins unique, une gaine (3) réduisant le bruit, et la région restante du câble, qui est déplacée en dehors du point de déviation (2), ne présente pas de gaine.

2. Dispositif selon la revendication 1, **caractérisé en ce que** la gaine (3) repose sur le câble métallique intérieur (4).

3. Dispositif selon la revendication 1, **caractérisé en ce que** la gaine (3) repose sur le fil métallique hélicoïdal (5).

4. Dispositif selon l'une des revendications 1 à 3, **caractérisé en ce que** le câble d'entraînement (1) est déplacé dans sa direction longitudinale par la force d'entraînement.

5. Dispositif selon l'une des revendications 1 à 4, **caractérisé en ce que** l'élément (6) déplacé de manière rectiligne est relié à un store de fenêtre (10) qui sert à couvrir une fenêtre de véhicule automobile.
